# EUROPEAN PATENT APPLICATION

(11) **EP 3 603 411 A1**
(43) Date of publication of application: **05.02.2020**
(21) Application number: 18776658.9
(22) Date of filing: 20.03.2018
(51) Int. Cl.: A23G 3/34, A23G 3/38

(54) **SOFT CANDY**

(30) Priority: 27.03.2017 JP 2017061072
(71) Applicant: Lotte Co., Ltd., Tokyo 160-0023 (JP)
(72) Inventor: DOGUCHI Yasuhiro, Saitama-shi Saitama 336-0027 (JP); FUJIMOTO Ichiro, Saitama-shi Saitama 336-0027 (JP)
(74) Representative: Blodig, Wolfgang
(86) International application number: PCT/JP2018/010957
(87) International publication number: WO 2018/180751

(57) **Abstract**

To provide a delicious soft candy giving a mint-based feeling of coolness. Provided is a soft candy including 2.0% by weight or more and 15% by weight or less of oil or fat, and 0.2% by weight or more and less than 3.0% by weight of L-menthol and its derivative in terms of the solid content.

## Description

### Technical Field

The present invention relates to a soft candy.

### Background Art

Sweets giving a strong mint-based feeling of coolness are popular. However, increasing the mixing amount of mint-based components for the purpose of increasing the feeling of coolness of candies giving a mint-based feeling of coolness, the bitter taste also increases.

Soft candies become popular in recent years owing to their soft texture. However, there are not so many mint-based soft candies.

Mint-based gums, tablets, and hard candies are available, but they do not give the soft melting texture characteristic to soft candies. Therefore, as a mint-based sweet, a novel sweet which gives a feeling of coolness is demanded.

Patent Literature 1 discloses a bitter taste inhibitor of a mint-based flavoring agent containing an edible oil and fat as an active ingredient, but does not include disclosure about a soft candy.

Patent Literature 2 discloses a sugarless soft candy composed mainly of a mixture of an amorphous glycitol and a crystalline glycitol, but does not include disclosure about a delicious soft candy giving a mint-based feeling of coolness.

### Citation List

### Patent Literature

PTL 1: JP 2004-18829 A
PTL 2: JP 2006-158234 A

### Summary of Invention

### Technical Problem

To provide a delicious soft candy giving a mint-based feeling of coolness.

### Solution to Problem

A soft candy containing 2.0% by weight or more and 15.0% by weight or less of oil or fat, and 0.2% by weight or more and less than 3.0% by weight of L-menthol and its derivative in terms of the solid content is provided.

### Advantageous Effects of Invention

The invention allows to provide and produce a soft candy giving a strong feeling of coolness of mint while suppressing the bitter taste of the mint-based flavoring agent. Additionally, the soft candy of the present invention offers a unique feeling of coolness that allows a perception that the chewed object containing a mint-based flavoring agent passes through in the mouth, throat, and esophagus.

### Brief Description of Drawings

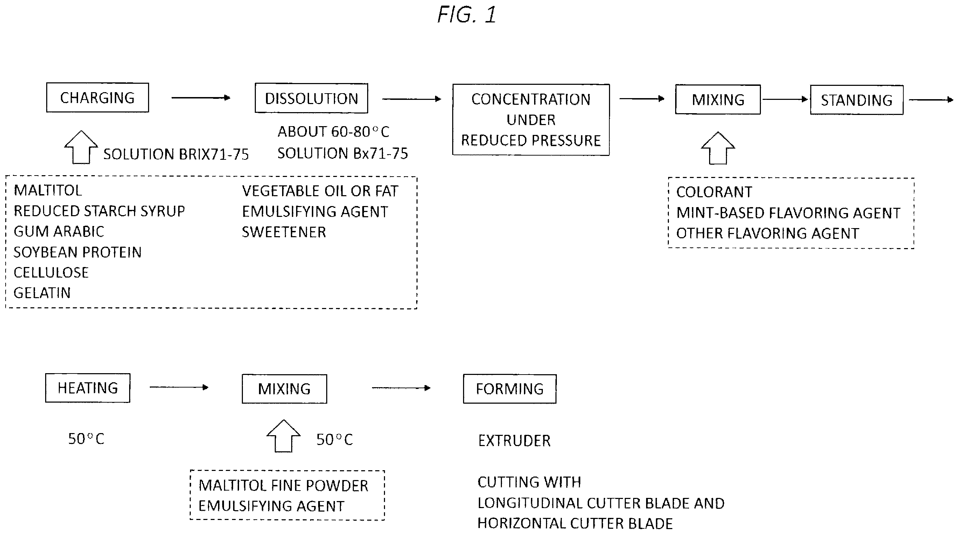

[Fig. 1] Fig. 1 depicts an example of the production of the soft candy of the present invention.

### Description of Embodiments

The present invention provides a soft candy containing 2.0% by weight or more and 15.0% by weight or less of oil or fat, and 0.2% by weight or more and less than 3.0% by weight of L-menthol and its derivative in terms of the solid content.

"In terms of the solid content" means that the ratio is in terms of the solid content, and refers to the ratio of the solid content (the weight excluding the moisture content) of the object component with reference to the weight of the finished product.

Candies are sweets composed mainly of carbohydrates such as saccharides, glycitols, and starch syrups. Soft candies are candies having a soft texture, and means soft candies having a moisture content of about 5 to 15%.

Sweets resembling soft candies include gummy candies. However, gummy candies do not contain oil or fat and are not emulsified unlike soft candies, and they are different in texture (gummy candies are more elastic) and formability (many gummy candies are formed with a die).

Caramel, fudge, nougat, taffy, and fondant are included in soft candies.

The soft candy of the present invention contains 2.0% by weight or more and 15.0% by weight or less of oil or fat in terms of the solid content. The moisture content of the oil or fat is close to 0%, so that its mixing amount will not change when determined by the mixing ratio. When the oil or fat content exceeds 15%, the emulsified state is destroyed by physical stimulation during forming, which makes it difficult to produce the soft candy.

The oil or fat which may be used in the soft candy of the present invention is not particularly limited, and examples include vegetable oil or fat, palm oil, soybean oil, rapeseed oil, sunflower oil, cottonseed oil, coconut oil, corn oil, sesame oil, shea butter, animal oil and fat, salad oil, rice oil, rice bran oil, camellia oil, canola oil, safflower oil, Benibana oil, Perilla frutescens oil, linseed oil, olive oil, arachis oil, almond oil, avocado oil, hazelnut oil, walnut oil, grape seed oil, cacao butter, peanut butter, lard (pig tallow), fett (beef tallow), milk fat, butter, margarine, shortening, and fresh cream.

The soft candy of the present invention contains 0.2% by weight or more and less than 3.0% by weight of L-menthol and its derivative in terms of the solid content. L-menthol is a compound having a synonym of [1R-(1α,2β,5α)]-6-methyl-2-(1-methylethyl) cyclohexanol. Examples of the menthol derivative include menthol methyl ether, menthol ethyl ether, menthol propyl ether, menthol butyl ether, menthyl acetate, menthyl propionate, menthyl lactate, monomenthyl glyceryl ether, dimenthyl glyceryl ether, monomenthyl propylene glycol ether, dimethyl propylene glycol ether, glutaric acid monomenthyl, glutaric acid dimenthyl, 3-(1-menthoxy)propane-1,2-diol, p-menthane-3,8-diol, 6-isopropyl-9-methyl-1,4-dioxaspiro-(4,5)-decane-2-methanol, menthyl succinate and its alkaline earth salts, trimethylcyclohexanol, N-ethyl-2-isopropyl-5-methylcyclohexane carboxamide, 3-(1-menthoxy)-2-methylpropane-1,2-diol, menthone glycerol ketal, menthyl lactate, [1'R,2'S,5'R]-2-(5'-methyl-2'-(methylethyl) cyclohexyl oxy) ethane-1-ol, [1'R,2'S,5'R]-3-(5'-methyl-2'-(methylethyl)cyclohexyloxy)propane-1-ol, and [1'R,2'S,5'R]-4-(5'-methyl-2'-(methylethyl)cyclohexyloxy)butane-1-ol.

L-menthol and its derivative may be natural origin or be synthetic. The method for introducing L-menthol and its derivative to the soft candy of the present invention is not limited, but in many cases, L-menthol or its derivative is added, in the production process, in the form of a mint-based flavoring agent containing L-menthol or its derivative. The L-menthol and its derivative may be directly added to the soft candy of the present invention.

Examples of the mint-based flavoring agent include peppermint oil, oil of spearmint, essential oils such as mint, and industrially produced flavoring agents (liquid, powder, solid, or any form). It may be added as a natural product such as mint, peppermint, or spearmint leaves. The concentration of L-menthol and its derivative may be measured by gas chromatography (GC). Examples of the measurement of the concentration of L-menthol and its derivative using GC include the following method.

Firstly, the sample is collected into an eggplant-shaped flask. To the collected sample, a solvent (benzene and/or hexane) and an internal standard substance (biphenyl) are added, and subjected to reflux-extraction. After dehydration, GC analysis is carried out. For the analysis, for example, when 6890N (Agilent Technologies) and a capillary column DB-17 having a diameter of 0.25 mm x 30 m and a df. of 0.25 µm are used as instruments, the measurement can be carried out at a column temperature: 60°C → 5°C/min → 120°C → 1°C/min → 140°C → 5°C/min → 250°C (10 min), and an injection amount of 1 µL.

In the soft candy of the present invention, the oil or fat incorporates with the mint-based flavoring agent, whereby the feeling of coolness of mint is easily diffused in the mouth, which likely results in a strong feeling of coolness. Additionally, in the soft candy of the present invention, the oil or fat connects the candy dough and the flavoring agent, which gives a feeling of unity to the taste.

Furthermore, the soft candy of the present invention may be non-sugar. The term "non-sugar" means that the candy contains no or little saccharide, and satisfies that the content of monosaccharide or disaccharide excluding glycitol in the candy is about less than 0.5 g per 100 g of each foodstuff.

Soft candies easily adhere to teeth, and thus are regarded to tend to cause caries. Mint-based soft candies are often eaten at the end of meal for enjoying a feeling of coolness, and liked by consumers having high consciousness for cleanliness and health. Therefore, mint-based non-sugar soft candies which will not cause caries are particularly preferred and demanded. Additionally, non-sugar soft candies are demanded in the point that they have lower calories than soft candies containing sugar. Furthermore, the sweeteners such as maltitol used in non-sugar soft candies fit well with the feeling of coolness of mint.

The soft candy of the present invention may contain, in addition to above ingredients, as raw materials, a glycitol, gum arabic, gelatin, a protein, cellulose, other flavoring agent, an emulsifying agent, a sweetener, and a colorant. Furthermore, the soft candy of the present invention may be sugar-coated. It may further contain saccharides.

Examples of the glycitol include maltitol, erythritol, xylitol, sorbitol, isomalt, mannitol, lactitol, and reduced starch syrup. In the present invention, the most preferred examples of the glycitol are maltitol and reduced starch syrup. Maltitol is also referred to as reduced malt sugar, and is generally obtained by reducing maltose, but may be any maltitol irrespective of the preparation or particle size.

Reduced starch syrup is obtained by reducing starch syrup, which is a decomposed product of starch, and may be selected from commercial products without any limitation.

Gum arabic is a water soluble polysaccharide prepared from Acacia Senegal or Acacia Seyal of acacia genus, or from the sap of the acacia genus, and may be selected from commercial products irrespective of origin.

Gelatin is obtained from collagen, which is a connective tissue of animal skin and bones, and may be referred to as glue. The gelatin used herein may be selected from those derived from pig skin, pig bone, cattle skin, cattle bone, or fish, regardless of origin. The bloom value indicating the strength of the gelatin is preferably about 250 or more.

The protein may be animal protein, vegetable protein, soybean-derived protein, milk-derived protein, albumen-derived protein, or any other protein.

When an emulsifying agent is further added, for example, organic acid monoglycerides, glycerol fatty acid esters, polyglycerol fatty acid esters, sucrose fatty acid esters, sorbitan fatty acid esters, propylene glycol fatty acid esters, lecithin, and milk components such as milk, skimmed milk powder, whole milk powder, and fresh cream may be used.

When a flavoring agent is added, for example, citrus essential oils such as orange oil, lemon oil, grapefruit oil, lime oil, tangerine oil, and mandarin oil, known spice essential oils such as allspice, anise seed, basil, laurel, cardamom, celery, clove, cinnamon, cumin, dill, garlic, parsley, mace, mustard, onion, paprika, rosemary, and pepper, or known isolated or synthetic flavoring agents such as oleoresins, limonene, linalool, nerol, citronellol, geraniol, citral, eugenol, cinnamic aldehyde , anethole, perilla aldehyde, vanillin, γ-undecalactone, allyl caproate, L-carvone, and maltol, and formulated flavoring agents, which are prepared by mixing these citrus essential oils, spice essential oils, and synthetic flavoring agent at the appropriate ratio according to the purpose of expressing citrus mix, and various fruits, may be used.

When a sweetener is added, it is particularly preferred that a high sweetness sweetener be added. Specific examples of the high sweetness sweetener include α-glucosyltransferase-treated stevia, Aspartame, acesulfame potassium, alitame, licorice extract (glycyrrhizin), triammonium glycyrrhizinate, tripotassium glycyrrhizinate, trisodium glycyrrhizinate, diammonium glycyrrhizinate, dipotassium glycyrrhizinate, disodium glycyrrhizinate, curculin, saccharin, saccharin sodium, cyclamate, sucralose, stevia extract, stevia powder, dulcin, thaumatin, Tenryocha extract, Nigeria berry extract, neotame, neohesperidin dihydrochalcone, fructosyl transferase-treated stevia, Brazil licorice extract, miracle fruit extract, Siraitia grosvenorii extract, enzyme-treated licorice, and enzyme-degraded licorice.

Additionally, the soft candy of the present invention contains a high sweetness sweetener, which further reduces the mint-based bitter taste. In particular, when the soft candy is non-sugar, the addition of a high sweetness sweetener makes the soft candy delicious regardless of the absence of sugar.

Furthermore, other sweetener may be added without any limitation. Its examples include monosaccharides such as arabinose, galactose, xylose, glucose, fucose, sorbose, fructose, rhamnose, ribose, isomerized liquid sugar, and N-acetyl glucosamine; disaccharides such as isotrehalose, sucrose, trehalulose, trehalose, neotrehalose, palatinose, maltose, melibiose, lactulose, and lactose; oligosaccharides such as α-cyclodextrin, β-cyclodextrin, isomaltooligosaccharide (for example, isomaltose, isomaltotriose, and panose), oligo-N-acetyl glucosamine, galactosyl sucrose, galactosyl lactose, galactopyranosyl (β1-3) galactopyranosyl (β1-4) glucopyranose, galactopyranosyl (β1-3) glucopyranose, galactopyranosyl (β1-6) galactopyranosyl (β1-4) glucopyranose, galactopyranosyl (β1-6) glucopyranose, xylooligosaccharide (for example, xylotriose and xylobiose), gentiooligosaccharide (for example, gentiobiose, gentiotriose, and gentiotetraose), stachyose, Theande oligo, nigerooligosaccharide (for example, nigerose), palatinose oligosaccharide, palatinose syrup, fructooligosaccharide (for example, kestose and nystose), fructofuranosyl nystose, polydextrose, maltosyl-β-cyclodextrin, maltooligosaccharide (for example, maltotriose, tetraose, pentaose, hexaose, and heptaose), raffinose, sugar coupled starch syrup (coupling sugar), soybean oligosaccharide, invert sugar, and starch syrup; glycitols such as isomaltitol, erythritol, xylitol, glycerol, sorbitol, palatinit, maltitol, maltotetraitol, maltotriitol, mannitol, lactitol, reduced isomaltooligosaccharide, reduction xylooligosaccharide, reduced gentiooligosaccharide, reduced malt sugar starch syrup, and reduced starch syrup.

An example of production of the soft candy of the present invention is described below. Firstly, a glycitol, reduced starch syrup, gum arabic, gelatin, and, as needed, an emulsifying agent, a sweetener, and others are mixed and dissolved. Secondly, the object is concentrated under reduced pressure to a moisture content of preferably 10% or less. At this time, a mint-based flavoring agent, and as needed, other ingredients such as a flavoring agent and a colorant are added and mixed. To the mixture, a glycitol fine powder is further added, and mixed. The mixed dough is formed. The forming method is not limited.

The formed soft candy may be coated by, for example, sugar coating, or may not be coated. When sugar coating is applied, for example, the produced soft candy is appropriately aged, and sugar-coated with a dough containing a glycitol, gum arabic, a flavoring agent, and others.

The present invention is described below in detail based on the following examples, but will not be limited by these examples.

### Example

In the present example, the mixing ratio means the weights of the raw materials in the weight of the completed soft candy. The weights of the raw materials contain the moisture increased or lost during the production, so that the total of the mixing ratios may not be 100%.

The ratio in terms of the solid content refers to the ratio of a raw material in terms of the solid content (the weight excluding moisture content) in the weight of the completed soft candy.

In the present example, the soft candy was produced as depicted in Fig. 1. Specifically, firstly, maltitol, reduced starch syrup, gum arabic, gelatin, soybean protein, cellulose, vegetable oil or fat, an emulsifying agent, and a high sweetness sweetener (acesulfame potassium, sucralose) were charged, dissolved at 60 to 80°C, prepared to have a Bx (solid content concentration in the solution) of 71 to 75, and concentrated under reduced pressure at 112°C to a moisture content of about 8%. To the object, a mint-based flavoring agent containing flavoring agent and others were added. Additionally, in the present example, thereafter, the temperature was set at 50°C, and the maltitol fine powder and the emulsifying agent were added and mixed. The maltitol fine powder refers to the one which having a distribution of the maltitol particle size is 100 µm or less cumulative 90%. Thereafter, the dough was formed.

The soft candies of Examples 1 to 36 were produced by the above-described method at the mixing ratios listed in Tables 1 to 6. The ratios in terms of the solid content are also listed in the tables. In the tables, the mixing amounts of the L-menthol and menthol derivative were calculated on the precondition that the proportion of the L-menthol and menthol derivative to the all flavoring agents contained in the soft candy is 50% by weight.

**[Table 1]**

| | Example 1 | | Example 2 | | Example 3 | | Example 4 | | Example 5 | | Example 6 | |
|---|---|---|---|---|---|---|---|---|---|---|---|---|
| | Mixing amount (% by weight) | | Mixing amount (% by weirht) | | Mixing amount (% by weight) | | Mixing amount (% by weight) | | Mixing amount (% by weight) | | Mixing amount (% by weight) | |
| | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (% |
| Maltitol | 59.5 | 58.6 | 59.2 | 58.3 | 58.8 | 57.9 | 57.4 | 56.5 | 55.9 | 55.1 | 55.2 | 54.4 |
| Reduced starch syrup | 35.9 | 25.1 | 35.7 | 25.0 | 35.5 | 24.8 | 34.6 | 24.2 | 33.7 | 23.6 | 33.3 | 23.3 |
| Vegetable oil or fat | 0.0 | 0.0 | 0.0 | 0.0 | 0.0 | 0.0 | 0.0 | 0.0 | 0.0 | 0.0 | 0.0 | 0.0 |
| Gum arabic | 5.0 | 4.4 | 5.0 | 4.4 | 5.0 | 4.4 | 5.0 | 4.4 | 5.0 | 4.4 | 5.0 | 4.4 |
| Gelatin | 3.0 | 2.6 | 3.0 | 2.6 | 3.0 | 2.6 | 3.0 | 2.6 | 3.0 | 2.6 | 3.0 | 2.6 |
| Soybean protein | 1.0 | 0.9 | 1.0 | 0.9 | 1.0 | 0.9 | 1.0 | 0.9 | 1.0 | 0.9 | 1.0 | 0.9 |
| Cellulose | 1.0 | 0.9 | 1.0 | 0.9 | 1.0 | 0.9 | 1.0 | 0.9 | 1.0 | 0.9 | 1.0 | 0.9 |
| Entire amount of flavoring agent | 0.0 | 0.0 | 0.4 | 0.4 | 1.0 | 1.0 | 3.0 | 3.0 | 5.0 | 5.0 | 6.0 | 6.0 |
| Emulsifying agent | 1.1 | 1.1 | 1.1 | 1.1 | 1.1 | 1.1 | 1.1 | 1.1 | 1.1 | 1.1 | 1.1 | 1.1 |
| Sweetener | 0.5 | 0.4 | 0.5 | 0.4 | 0.5 | 0.4 | 0.5 | 0.4 | 0.5 | 0.4 | 0.5 | 0.4 |
| Finished product (moisture 6.0%) | 107.0 | 94.0 | 106.9 | 94.0 | 106.9 | 94.0 | 106.6 | 94.0 | 106.2 | 94.0 | 106.1 | 94.0 |
| L-menthol and menthol derivative (*50% of the flavoring agent is I-menthol and menthol derivative) | 0.0 | 0.0 | 0.2 | 0.2 | 0.5 | 0.5 | 1.5 | 1.5 | 2.5 | 2.5 | 3.0 | 3.0 |

**[Table 2]**

| | Example 7 | | Example 8 | | Example 9 | | Example 10 | | Example 11 | | Example 12 | |
|---|---|---|---|---|---|---|---|---|---|---|---|---|
| | Mixing amount (% by weight) | | Mixing amount (% by weight) | | Mixing amount (% by weight) | | Mixing amount (% by weight) | | Mixing amount (% by weight) | | Mixing amount (% by weight) | |
| | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) |
| Maltitol | 58.8 | 57.9 | 58.5 | 57.6 | 58.1 | 57.2 | 56.7 | 55.8 | 55.2 | 54.4 | 54.5 | 53.7 |
| Reduced starch syrup | 35.5 | 24.8 | 35.3 | 24.7 | 35.0 | 24.5 | 34.2 | 23.9 | 33.3 | 23.3 | 32.9 | 23.0 |
| Vegetable oil or fat | 1.0 | 1.0 | 1.0 | 1.0 | 1.0 | 1.0 | 1.0 | 1.0 | 1.0 | 1.0 | 1.0 | 1.0 |
| Gum arabic | 5.0 | 4.4 | 5.0 | 4.4 | 5.0 | 4.4 | 5.0 | 4.4 | 5.0 | 4.4 | 5.0 | 4.4 |
| Gelatin | 3.0 | 2.6 | 3.0 | 2.6 | 3.0 | 2.6 | 3.0 | 2.6 | 3.0 | 2.6 | 3.0 | 2.6 |
| Soybean protein | 1.0 | 0.9 | 1.0 | 0.9 | 1.0 | 0.9 | 1.0 | 0.9 | 1.0 | 0.9 | 1.0 | 0.9 |
| Cellulose | 1.0 | 0.9 | 1.0 | 0.9 | 1.0 | 0.9 | 1.0 | 0.9 | 1.0 | 0.9 | 1.0 | 0.9 |
| Entire amount of flavoring agent | 0.0 | 0.0 | 0.4 | 0.4 | 1.0 | 1.0 | 3.0 | 3.0 | 5.0 | 5.0 | 6.0 | 6.0 |
| Emulsifying agent | 1.1 | 1.1 | 1.1 | 1.1 | 1.1 | 1.1 | 1.1 | 1.1 | 1.1 | 1.1 | 1.1 | 1.1 |
| Sweetener | 0.5 | 0.4 | 0.5 | 0.4 | 0.5 | 0.4 | 0.5 | 0.4 | 0.5 | 0.4 | 0.5 | 0.4 |
| Finished product (moisture 6.0%) | 106.9 | 94.0 | 106.8 | 94.0 | 106.7 | 94.0 | 106.5 | 94.0 | 106.1 | 94.0 | 106.0 | 94.0 |
| L-menthol and menthol derivative (*50% of the flavoring agent is I-menthol and menthol derivative) | 0.0 | 0.0 | 0.2 | 0.2 | 0.5 | 0.5 | 1.5 | 1.5 | 2.5 | 2.5 | 3.0 | 3.0 |

**[Table 3]**

| | Example 13 | | Example 14 | | Example 15 | | Example 16 | | Example 17 | | Example 18 | |
|---|---|---|---|---|---|---|---|---|---|---|---|---|
| | Mixing amount (% by weight) | | Mixing amount (% by weight) | | Mixing amount (% by weight) | | Mixing amount (% by weight) | | Mixing amount (% by weight) | | Mixing amount (% by weight) | |
| | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) |
| Maltitol | 58.1 | 57.2 | 57.8 | 56.9 | 57.4 | 56.5 | 55.9 | 55.1 | 54.5 | 53.7 | 53.8 | 53.0 |
| Reduced starch syrup | 35.0 | 24.5 | 34.9 | 24.4 | 34.6 | 24.2 | 33.7 | 23.6 | 32.9 | 23.0 | 32.5 | 22.7 |
| Vegetable oil or fat | 2.0 | 2.0 | 2.0 | 2.0 | 2.0 | 2.0 | 2.0 | 2.0 | 2.0 | 2.0 | 2.0 | 2.0 |
| Gum arabic | 5.0 | 4.4 | 5.0 | 4.4 | 5.0 | 4.4 | 5.0 | 4.4 | 5.0 | 4.4 | 5.0 | 4.4 |
| Gelatin | 3.0 | 2.6 | 3.0 | 2.6 | 3.0 | 2.6 | 3.0 | 2.6 | 3.0 | 2.6 | 3.0 | 2.6 |
| Soybean protein | 1.0 | 0.9 | 1.0 | 0.9 | 1.0 | 0.9 | 1.0 | 0.9 | 1.0 | 0.9 | 1.0 | 0.9 |
| Cellulose | 1.0 | 0.9 | 1.0 | 0.9 | 1.0 | 0.9 | 1.0 | 0.9 | 1.0 | 0.9 | 1.0 | 0.9 |
| Entire amount of flavoring agent | 0.0 | 0.0 | 0.4 | 0.4 | 1.0 | 1.0 | 3.0 | 3.0 | 5.0 | 5.0 | 6.0 | 6.0 |
| Emulsifying agent | 1.1 | 1.1 | 1.1 | 1.1 | 1.1 | 1.1 | 1.1 | 1.1 | 1.1 | 1.1 | 1.1 | 1.1 |
| Sweetener | 0.5 | 0.4 | 0.5 | 0.4 | 0.5 | 0.4 | 0.5 | 0.4 | 0.5 | 0.4 | 0.5 | 0.4 |
| Finished product (moisture 6.0%) | 106.7 | 94.0 | 106.7 | 94.0 | 106.6 | 94.0 | 106.2 | 94.0 | 106.0 | 94.0 | 105.9 | 94.0 |
| L-menthol and menthol derivative (*50% of the flavoring agent is I-menthol and menthol derivative) | 0.0 | 0.0 | 0.2 | 0.2 | 0.5 | 0.5 | 1.5 | 1.5 | 2.5 | 2.5 | 3.0 | 3.0 |

**[Table 4]**

| | Example 19 | | Example 20 | | Example 21 | | Example 22 | | Example 23 | | Example 24 | |
|---|---|---|---|---|---|---|---|---|---|---|---|---|
| | Mixing amount (% by weight) | | Mixing amount (% by weight) | | Mixing amount (% by weight) | | Mixing amount (% by weight) | | Mixing amount (% by weight) | | Mixing amount (% by weight) | |
| | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) |
| Maltitol | 56.7 | 55.8 | 56.4 | 55.5 | 55.9 | 55.1 | 54.5 | 53.7 | 53.1 | 52.3 | 52.4 | 51.6 |
| Reduced starch syrup | 34.2 | 23.9 | 34.0 | 23.8 | 33.7 | 23.6 | 32.9 | 23.0 | 32.0 | 22.4 | 31.6 | 22.1 |
| Vegetable oil or fat | 4.0 | 4.0 | 4.0 | 4.0 | 4.0 | 4.0 | 4.0 | 4.0 | 4.0 | 4.0 | 4.0 | 4.0 |
| Gum arabic | 5.0 | 4.4 | 5.0 | 4.4 | 5.0 | 4.4 | 5.0 | 4.4 | 5.0 | 4.4 | 5.0 | 4.4 |
| Gelatin | 3.0 | 2.6 | 3.0 | 2.6 | 3.0 | 2.6 | 3.0 | 2.6 | 3.0 | 2.6 | 3.0 | 2.6 |
| Soybean protein | 1.0 | 0.9 | 1.0 | 0.9 | 1.0 | 0.9 | 1.0 | 0.9 | 1.0 | 0.9 | 1.0 | 0.9 |
| Cellulose | 1.0 | 0.9 | 1.0 | 0.9 | 1.0 | 0.9 | 1.0 | 0.9 | 1.0 | 0.9 | 1.0 | 0.9 |
| Entire amount of flavoring agent | 0.0 | 0.0 | 0.4 | 0.4 | 1.0 | 1.0 | 3.0 | 3.0 | 5.0 | 5.0 | 6.0 | 6.0 |
| Emulsifying agent | 1.1 | 1.1 | 1.1 | 1.1 | 1.1 | 1.1 | 1.1 | 1.1 | 1.1 | 1.1 | 1.1 | 1.1 |
| Sweetener | 0.5 | 0.4 | 0.5 | 0.4 | 0.5 | 0.4 | 0.5 | 0.4 | 0.5 | 0.4 | 0.5 | 0.4 |
| Finished product (moisture 6.0%) | 106.5 | 94.0 | 106.4 | 94.0 | 106.2 | 94.0 | 106.0 | 94.0 | 105.7 | 94.0 | 105.6 | 94.0 |
| L-menthol and menthol derivative (*50% of the flavoring agent is I-menthol and menthol derivative) | 0.0 | 0.0 | 0.2 | 0.2 | 0.5 | 0.5 | 1.5 | 1.5 | 2.5 | 2.5 | 3.0 | 3.0 |

**[Table 5]**

| | Example 25 | | Example 26 | | Example 27 | | Example 28 | | Example 29 | | Example 30 | |
|---|---|---|---|---|---|---|---|---|---|---|---|---|
| | Mixing amount (% by weight) | | Mixing amount (% by weight) | | Mixing amount (% by weight) | | Mixing amount (% by weight) | | Mixing amount (% by weight) | | Mixing amount (% by weight) | |
| | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) |
| Maltitol | 55.2 | 54.4 | 55.0 | 54.1 | 54.5 | 53.7 | 53.1 | 52.3 | 51.7 | 50.9 | 51.0 | 50.2 |
| Reduced starch syrup | 33.3 | 23.3 | 33.1 | 23.2 | 32.9 | 23.0 | 32.0 | 22.4 | 31.2 | 21.8 | 30.7 | 21.5 |
| Vegetable oil or fat | 6.0 | 6.0 | 6.0 | 6.0 | 6.0 | 6.0 | 6.0 | 6.0 | 6.0 | 6.0 | 6.0 | 6.0 |
| Gum arabic | 5.0 | 4.4 | 5.0 | 4.4 | 5.0 | 4.4 | 5.0 | 4.4 | 5.0 | 4.4 | 5.0 | 4.4 |
| Gelatin | 3.0 | 2.6 | 3.0 | 2.6 | 3,0 | 2.6 | 3.0 | 2.6 | 3.0 | 2.6 | 3.0 | 2.6 |
| Soybean protein | 1.0 | 0.9 | 1.0 | 0.9 | 1.0 | 0.9 | 1.0 | 0.9 | 1.0 | 0.9 | 1.0 | 0.9 |
| Cellulose | 1.0 | 0.9 | 1.0 | 0.9 | 1.0 | 0.9 | 1.0 | 0.9 | 1.0 | 0.9 | 1.0 | 0.9 |
| Entire amount of flavoring agent | 0.0 | 0.0 | 0.4 | 0.4 | 1.0 | 1.0 | 3.0 | 3.0 | 5.0 | 5.0 | 6.0 | 6.0 |
| Emulsifying agent | 1.1 | 1.1 | 1.1 | 1.1 | 1.1 | 1.1 | 1.1 | 1.1 | 1.1 | 1.1 | 1.1 | 1.1 |
| Sweetener | 0.5 | 0.4 | 0.5 | 0.4 | 0.5 | 0.4 | 0.5 | 0.4 | 0.5 | 0.4 | 0.5 | 0.4 |
| Finished product (moisture 6.0%) | 106.1 | 94.0 | 106.1 | 94.0 | 106.0 | 94.0 | 105.7 | 94.0 | 105.5 | 94.0 | 105.3 | 94.0 |
| L-menthol and menthol derivative (*50% of the flavoring agent is I-menthol and menthol derivative) | 0.0 | 0.0 | 0.2 | 0.2 | 0.5 | 0.5 | 1.5 | 1.5 | 2.5 | 2.5 | 3.0 | 3.0 |

**[Table 6]**

| | Example 31 | | Example 32 | | Example 33 | | Example 34 | | Example 35 | | Example 36 | |
|---|---|---|---|---|---|---|---|---|---|---|---|---|
| | Mixing amount (% by weight) | | Mixing amount (% by weight) | | Mixing amount (% by weight) | | Mixing amount (% by weight) | | Mixing amount (% by weight) | | Mixing amount (% by weight) | |
| | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) | Mixing ratio (%) | Ratio in terms of solid content (%) |
| Maltitol | 52.4 | 51.6 | 52.1 | 51.3 | 51.7 | 50.9 | 50.3 | 49.5 | 48.8 | 48.1 | 48.1 | 47.4 |
| Reduced starch syrup | 31.6 | 22.1 | 31.4 | 22.0 | 31.2 | 21.8 | 30.3 | 21.2 | 29.5 | 20.6 | 29.0 | 20.3 |
| Vegetable oil or fat | 10.0 | 10.0 | 10.0 | 10.0 | 10.0 | 10.0 | 10.0 | 10.0 | 10.0 | 10.0 | 10.0 | 10.0 |
| Gum arabic | 5.0 | 4.4 | 5.0 | 4.4 | 5.0 | 4.4 | 5.0 | 4.4 | 5.0 | 4.4 | 5.0 | 4.4 |
| Gelatin | 3.0 | 2.6 | 3.0 | 2.6 | 3.0 | 2.6 | 3.0 | 2.6 | 3.0 | 2.6 | 3.0 | 2.6 |
| Soybean protein | 1.0 | 0.9 | 1.0 | 0.9 | 1.0 | 0.9 | 1.0 | 0.9 | 1.0 | 0.9 | 1.0 | 0.9 |
| Cellulose | 1.0 | 0.9 | 1.0 | 0.9 | 1.0 | 0.9 | 1.0 | 0.9 | 1.0 | 0.9 | 1.0 | 0.9 |
| Entire amount of flavoring agent | 0.0 | 0.0 | 0.4 | 0.4 | 1.0 | 1.0 | 3.0 | 3.0 | 5.0 | 5.0 | 6.0 | 6.0 |
| Emulsifying agent | 1.1 | 1.1 | 1.1 | 1.1 | 1.1 | 1.1 | 1.1 | 1.1 | 1.1 | 1.1 | 1.1 | 1.1 |
| Sweetener | 0.5 | 0.4 | 0.5 | 0.4 | 0.5 | 0.4 | 0.5 | 0.4 | 0.5 | 0.4 | 0.5 | 0.4 |
| Finished product (moisture 6.0%) | 105.6 | 94.0 | 105.5 | 94.0 | 105.5 | 94.0 | 105.2 | 94.0 | 104.9 | 94.0 | 104.7 | 94.0 |
| L-menthol and menthol derivative (*50% of the flavoring agent is I-menthol and menthol derivative) | 0.0 | 0.0 | 0.2 | 0.2 | 0.5 | 0.5 | 1.5 | 1.5 | 2.5 | 2.5 | 3.0 | 3.0 |

Subsequently, the evaluation of the soft candies in the test examples were carried out by five experienced panelists, on the feeling of coolness in the mouth, throat, and esophagus, and deliciousness of mint. The evaluation criteria are as follows.

Feeling of coolness in the mouth, throat, and esophagus
‡: Very strong feeling of coolness is felt
†: Some feeling of coolness is felt
±: Little feeling of coolness is felt
-: No feeling of coolness is felt

Deliciousness of mint
‡: Very delicious
†: Delicious
±: Sparingly delicious
-: Absolutely not delicious

The results are listed in Table 7.

**[Table 7]**

| Example | Mixing ratio of oil or fat (% by weight) | Mixing ratio of L-menthol and menthol derivative (% by weight) | Feeling of coolness in mouth, throat, and esophagus | Deliciousness of mint | Comment |
|---|---|---|---|---|---|
| 1 | 0.0 | 0.0 | - - - - - | - - - - - | Bitters come directly when there are no oil or fat and there are many flavoring agents. |
| 2 | | 0.2 | ± ± ± ± ± | † † ± ± ± | I-menthol and menthol derivative 0.2% can be managed to eaten somehow. |
| 3 | | 0.5 | ± ± ± ± ± | - - - - - | I-menthol and menthol derivatives 0.5% or more are too bitter to eat. |
| 4 | | 1.5 | ± ± ± ± ± | - - - - - | |
| 5 | | 2.5 | † † † ± ± | - - - - - | |
| 6 | | 3.0 | † † † ± ± | - - - - - | |
| 7 | 1.0 | 0.0 | - - - - - | - - - - - | If there are even a little oil or fat, the deliciousness of mint comes out, but it is still bitter. |
| 8 | | 0.2 | ± ± ± ± ± | † † † ± | There is feeling of coolness to the throat when there are many flavoring agents, but it is hard to eat. |
| 9 | | 0.5 | ± ± ± ± ± | ± ± ± ± - | I-menthol and menthol derivative 0.2% can be managed to eaten somehow. |
| 10 | | 1.5 | † † † ± ± | - - - - - | I-menthol and menthol derivatives 1.5% or more are too bitter to eat. |
| 11 | | 2.5 | † † † ± ± | - | |
| 12 | | 3.0 | † † † † ± | - - - - - | |
| 13 | 2.0 | 0.0 | - - - - - | - - - - - | When oil or fat increase, the refreshing feeling and deliciousness of mint become compatible. Feeling of coolness is felt to the throat and esophagus as well as in the mouth when swallowing Even if I-menthol and menthol derivatives increase 0.5% or more, the intensity of feeling of coolness is more or less the same. |
| 14 | | 0.2 | ‡ ‡ † † † | † † ± ± ± | |
| 15 | | 0.5 | ‡ ‡ ‡ ‡ ‡ | ‡ ‡ ‡ † † | |
| 16 | | 1.5 | ‡ ‡ ‡ ‡ ‡ | ‡ ‡ ‡ ‡ † | As to the deliciousness of mint, I-menthol and menthol derivative 3.0% or more are too bitter to eat. |
| 17 | | 2.5 | ‡ ‡ ‡ ‡ ‡ | ‡ ‡ † † † | |
| 18 | | 3.0 | ‡ ‡ ‡ ‡ ‡ | - - - - - | |
| 19 | 4.0 | 0.0 | - - - - - | - - - - - | When oil or fat increase, the refreshing feeling and deliciousness of mint become compatible, Feeling of coolness is felt to the throat and esophagus as well as in the mouth when swallowing. Even if I-menthol and menthol derivatives increase 0.5% or more, the intensity of feeling of coolness is more or less the same. |
| 20 | | 0.2 | ‡ ‡ † † † | † † ± ± ± | |
| 21 | | 0.5 | ‡ ‡ ‡ ‡ ‡ | ‡ ‡ ‡ ‡ † | |
| 22 | | 1.5 | ‡ ‡ ‡ ‡ ‡ | ‡ ‡ ‡ ‡ ‡ | As to the deliciousness of mint, I-menthol and menthol derivative 3.0% or more are too bitter to eat. |
| 23 | | 2.5 | ‡ ‡ ‡ ‡ ‡ | ‡ ‡ † † † | |
| 24 | | 3.0 | ‡ ‡ ‡ ‡ ‡ | ± - - - - | |
| 25 | 6.0 | 0.0 | - - - - | - - - - - | When oil or fat increase, the refreshing feeling and deliciousness of mint become compatible. |
| 26 | | 0.2 | ‡ ‡ ‡ † † | † † † ± ± | The amount of oil or fat is felt adequate around this ratio. |
| 27 | | 0.5 | ‡ ‡ ‡ ‡ ‡ | ‡ ‡ ‡ ‡ ‡ | When swallowed, the feeling of coolness is strongly felt in the mouth, throat, and esophagus. |
| 28 | | 1.5 | ‡ ‡ ‡ ‡ ‡ | ‡ ‡ ‡ ‡ ‡ | Even if I-menthol and menthol derivatives increase 0.5% or more, the intensity of feeling of coolness is more or less the same. |
| 29 | | 2.5 | ‡ ‡ ‡ ‡ ‡ | ‡ ‡ ‡ ‡ ‡ | As to the deliciousness of mint, I-menthol and menthol derivative 3.0% or more are too bitter to eat. |
| 30 | | 3.0 | ‡ ‡ ‡ ‡ ‡ | ± ± - - - | |
| 31 | 10.0 | 0.0 | - - - - - | - - - - - | When oil or fat increase, the refreshing feeling and deliciousness of mint become compatible. Feeling of coolness is felt to the throat and esophagus as well as in the mouth when swallowing Even if I-menthol and menthol derivatives increase 0.5% or more, the intensity of feeling of coolness is more or less the same. |
| 32 | | 0.2 | ‡ ‡ ‡ ‡ ‡ | † † ± ± ± | |
| 33 | | 0.5 | ‡ ‡ ‡ ‡ ‡ | ‡ ‡ ‡ ‡ † | |
| 34 | | 1.5 | ‡ ‡ ‡ ‡ ‡ | ‡ ‡ ‡ ‡ ‡ | As to the deliciousness of mint, I-menthol and menthol derivative 3.0% or more are too bitter to eat. |
| 35 | | 2.5 | ‡ ‡ ‡ ‡ ‡ | ‡ ‡ ‡ † † | |
| 36 | | 3.0 | ‡ ‡ ‡ ‡ ‡ | ± ± ± - - | |

Good results were obtained in Examples 15 to 18, 21 to 24, 27 to 30, and 33 to 36. Furthermore, in Examples 14 to 18, 20 to 24, 26 to 30, 32 to 36, all the panelists highly evaluated the feeling of coolness in the mouth, throat, and esophagus. On the other hand, in Examples 6, 12, 18, 24, and 36, the evaluation on the deliciousness of mint was low.

More specifically, the soft candies containing 2.0% by weight or more of oil or fat and 0.2% by weight or more and less than 3.0% by weight of L-menthol and its derivative gave a feeling of coolness in the mouth, throat, and esophagus, and thus gave deliciousness of mint.

Additionally, it was found that L-menthol and its derivative gave a stronger feeling of coolness in the mouth, throat, and esophagus when its ratio is 0.5% by weight or more.

It was also found that the soft candy of the present invention offers a unique feeling of coolness that allows a perception that the chewed object containing a mint-based flavoring agent passes through in the mouth, throat, and esophagus. The soft candy is melted by licking under chewing, so that a higher amount of the liquid containing a mint-based flavoring agent passes through the mouth, throat, and esophagus than gums and hard candies. This is likely the reason that that the unique feeling of coolness which allows a perception that the chewed object containing a mint-based flavoring agent passes through the mouth, throat, and esophagus.

This application claims the priority of Japanese Patent Application No. 2017-061072 filed on March 27, 2017, and the content of which is incorporated herein by reference.

## Claims

1. A soft candy comprising 2.0% by weight or more and 15.0% by weight or less of oil or fat, and 0.2% by weight or more and less than 3.0% by weight of L-menthol and its derivative in terms of the solid content.

2. The soft candy according to Claim 1, which is non-sugar.

3. The soft candy according to Claim 1 or 2, which further comprises a high sweetness sweetener.
